# EUROPÄISCHE PATENTSCHRIFT

(11) **EP 3 015 601 B1**
(45) Veröffentlichungstag und Bekanntmachung des Hinweises auf die Patenterteilung: **02.08.2017**
(21) Anmeldenummer: 15189958.0
(22) Anmeldetag: 15.10.2015
(51) Int. Cl.: E01B 27/00, B65G 41/00, B65G 67/10

(54) **FAHRBARE, HÖHENVERSTELLBARE UND HORIZONTALVERSCHWENKBARE FÖRDERBANDANORDNUNG FÜR DEN GLEISBAU**
MOVABLE, HEIGHT-ADJUSTABLE AND HORIZONTALLY ROTATABLE CONVEYOR ASSEMBLY FOR RAILWAY TRACK CONSTRUCTION
ENSEMBLE DE BANDE TRANSPORTEUSE DANS LA POSE DE VOIE COMPORTANT UNE BANDE TRANSPORTEUSE RÉGLABLE EN HAUTEUR ET PIVOTANTE HORIZONTALEMENT

(30) Priorität: 27.10.2014 AT 507672014
(43) Veröffentlichungstag der Anmeldung: 04.05.2016
(73) Patentinhaber: HP3 Real GmbH, 1010 Wien (AT)
(72) Erfinder: Lichtberger, Bernhard, 4230 Pregarten (AT)
(74) Vertreter: Patentanwaltskanzlei Hübscher

(56) Entgegenhaltungen:
- DE-A1-102012 019 016

## Beschreibung

Die Erfindung bezieht sich auf eine Vorrichtung zur Materialförderung für den Gleisbau, mit einer auf einem Fahrwerk, insbesondere einem Raupenfahrwerk, verfahrbaren Materialverladeeinrichtung mit je wenigstens einem Übernahmeförderband zur Übernahme von Material und mit einem Übergabeförderband zur Übergabe von Material, wobei das Übergabeförderband um eine Fahrwerkhochachse mit einem Drehantrieb drehbar und entlang der Fahrwerkhochachse mit einem Hubtrieb höhenverstellbar ist.

Eine solche Vorrichtung ist aus der DE 10 2012 019016 A1 bekannt. Derartige Vorrichtungen dienen im Bahnbau insbesondere dem Be- und Entladen von Materialfördersiloeinheiten, zum Beladen von Eisenbahnschotterwagen oder können auch universell verwendet werden, wobei die Vorrichtung auf dem Gleis, auf einem Waggon oder neben dem Gleis stehen bzw. verfahren werden kann. Material-Förder-Siloeinheiten zum Laden, Liefern und Durchfördern von Gleisbaumaterial wie Schotter, Abraum oder Planumschutzschichtmaterial u. dgl. finden im Gleisbau bzw. bei der Gleiswartung Verwendung. Die Materialfördersiloeinheiten werden bei Bau- und Umbaumaßnahmen für die Gleise der Eisenbahn eingesetzt. Sie befördern und speichern entweder Neumaterialien wie Schotter oder Planums-Schutzschichtmaterial oder Gebrauchsmaterialien wie Abraum der bei Schotterreinigungsarbeiten anfällt oder aber gereinigten Schotter. Sie werden auch als Zwischenspeicher bei Schotterverteilmaschinen o.ä. eingesetzt.

Bekannte Materialfördersiloeinheiten verfügen über Silowaggons, die Gleisbaumaterial zwischen den Siloraum aufspannenden Seitenwänden auf einem Bodenförderband zur Förderung des Materials längs des Bodens aufnehmen. Die Materialsiloeinheit umfasst mehrere Waggons, die im Bereich ihrer einander zugewandten Stirnwände mit einer Einrichtung zur Übergabe des Materials von einem Wagen zu dem nächsten Wagen ausgestattet sind (DE 10 2009 037 568 B3). Dazu sind beide Stirnwände jedes Waggons nach unten verschwenkbar und ist auf oder in den beiden Stirnwänden jeweils ein Förderband zur Übergabe des Materials von einem Wagen zum benachbarten Wagen vorgesehen. Nach einer anderen Ausgestaltungsvariante kann der Wagen an seinen beiden Kopfenden jeweils ein unteres Übergabeförderband im Bereich des Bodenförderbandes aufweisen, welches untere Übergabeförderband derart ansteuerbar und betätigbar ist, dass es ausgehend von einer horizontalen Ausgangsstellung nach oben in eine Abwurfstellung zur Übergabe des Materials an den benachbarten Wagen verschwenkbar oder abknickbar ist.

Die Beladung der Materialfördersiloeinheiten erfolgt entweder in Schotterwerken oder mit Hilfe von Beladeeinrichtungen in die mittels Schubraupe, Bagger oder ähnlichem das Material eingebracht wird. Eine solche bekannte Beladestation ist mit einem gleisfahrbaren Laufwerk ausgestattet. Der Rahmen dieser Beladestation mit den Förderbändern ist an einer Seite nach unten absenkbar ausgeführt, damit der Beladetrichter niedriger zu liegen kommt. Über zwei Förderbänder wird die Höhe zum Beladen einer Materialfördersiloeinheit erreicht.

Eine andere bekannte Beladestation ist mit einem Raupenfahrwerk ausgestattet, mit dem sie im Gelände verfahren werden kann. Sie besteht aus einem Förderband mit Beladetrichter und zwei Förderbändern. Diese Beladestation muss in einem 90°-Winkel zum Gleis aufgestellt werden, womit dann längs des Gleises befindliche Materialfördersiloeinheiten beladen werden können. Damit die Beladestation gerade steht, müssen Unebenheiten sowie die Höhe zum Bahndamm durch eine Anschüttung mit Kies oder Sand ausgeglichen werden.

Eine weitere gleisfahrbare Beladestation weist ein drehbares Förderband auf, mit dem Schotter von einer Materialfördersiloeinheit aufgenommen und in weiterer Folge seitlich entladen werden kann. Dabei ist das Schwenkförderband so hoch und in der Reichweite passend ausgeführt, dass Gleisbaumaterial auch auf Schotterwagen, die sich im Nachbargleis befinden, umgeladen werden kann. Die schwenkbaren Entladeförderbänder herkömmlicher Materialfördersiloeinheiten sind zu kurz, so dass ihre Reichweite bei größeren Gleisabständen kein Entladen in Materialtransportwagen erlaubt.

Der Erfindung liegt somit die Aufgabe zugrunde, eine Vorrichtung der eingangs geschilderten Art zu schaffen, welche die beschriebenen verschiedenen Möglichkeiten der beschriebenen bekannten Beladestationen in eine Materialverlademaschine integriert die damit universeller einsetzbar wird.

Die Erfindung löst die gestellte Aufgabe mit einer Vorrichtung nach dem vorliegenden Anspruch 1. Auf einem Fahrwerk, beispielsweise einem Raupenfahrwerk, wird dazu eine höhenverstellbare Plattform vorgesehen, auf welcher sich ein Drehkranz befindet, mit dem das Übergabeförderband um eine Fahrwerkhochachse drehbar ist. Das Übergabeförderband ist zudem mit der höhenverstellbaren Plattform entlang der Fahrwerkhochachse mit einem Hubtrieb höhenverstellbar. Mit dem Hubtrieb ist die Höhenlage des Übergabeförderbandes einstellbar und mit dem Drehantrieb seine Schwenklage. Der erste Abschnitt übernimmt das Material vom Übernahmeförderband und der zweite Abschnitt fördert das Material auf das vordere Übergabeförderband, welches das Material in weiterer Folge auf die erforderliche Höhenlage bringt und abgibt.

Um die Höhenlage in einfacher Weise variieren zu können wird vorgeschlagen das vordere Übergabeförderband über eine Verstelleinrichtung parallel zum zweiten Abschnitt verlagerbar, also verschiebbar, auszubilden. Gegebenenfalls kann das Übergabeförderband teleskopisch ausgebildet sein. Das vordere der beiden Förderbänder ist also vereinfacht ausgedrückt ausschiebbar oder einziehbar.

Zudem kann das Übergabeförderband zwecks Einstellung des Steigungswinkels des Übergabeförderbandes mit einem Neigungsantrieb um eine Fahrwerkshorizontalachse eines Lagers neigungsverstelbar sein.

Zur ordnungsgemäßen Materialübergabe an das höhenverstellbare Übergabeförderband ist es von Vorteil, wenn auch das dem Übergabeförderband in Förderrichtung vorgeordnete, gegebenenfalls mit einem Beladetrichter ausgestattete, Übernahmeförderband entlang einer Fahrwerkhochachse mit einem Hubtrieb höhenverstellbar ist.

Beide Förderbänder mitsammen können quer geneigt werden. Ein Übernahmeförderband mit Beladetrichter ist mit teleskopierbaren Abstützvorrichtungen ausgestattet. Das Übernahmeförderband ist höhenverstellbar und im Anstellwinkel veränderlich ausgeführt.

Besonders universell einsetzbar wird die Vorrichtung, wenn das dem Übergabeförderband in Förderrichtung vorgeordnete, gegebenenfalls mit einem Beladetrichter ausgestattete, Übernahmeförderband zwecks Einstellung des Steigungswinkels des Übernahmeförderbandes mit einem Stelltrieb neigungsverstelbar ist. Zudem kann der Hubtrieb zwei Hydraulikzylinder umfassen, mit denen das Übergabeförderband um seine Förderlängsachse verkippbar ist, womit die Vorrichtung beispielsweise in Hanglagen ebenfalls noch ordnungsgemäß eingesetzt werden kann.

Auf dem Drehkranz sind zwei Förderbänder über eine Drehvorrichtung wie z.B. einer Drehpfanne gelagert. Mit Hilfe von mindestens einem Hydraulikzylinder können die Förderbänder seitlich geneigt werden. Das vordere Förderband ist dabei ausschiebbar und einziehbar. Zu Verlade- und Transportzwecken kann das vordere Förderband ganz eingezogen werden. Auf dem Raupenfahrwerk befinden sich ein Antriebsdieselmotor, ein Stromgenerator, eine Steuerungseinheit und eine Hydraulikversorgungseinheit. Ebenfalls auf dem Raupenfahrwerk ist ein Übernahmeförderband mit Beladetrichter. Dieses Übernahmeförderband ist mit einer Höhenverstelleinrichtung z.B. einem oder zwei Hydraulikzylindern ausgeführt. Zudem kann es mit einem anderen Hydraulikzylinder im Anstellwinkel verändert und in eine Verlade- und Transportposition gebracht werden. Am hinteren unteren Ende wird das Übernahmeförderband abgestützt. Die Abstützkonsolen können teleskopartig z.B. über Hydraulikzylinder oder manuell ausgefahren werden. Damit kann die Abstützweite verändert und die Kippsicherheit vergrößert werden, wozu dem Übernahmeförderband hinsichtlich ihres gegenseitigen Abstandes zueinander einstellbare Abstützungen zugeordnet sein können, die quer zur Förderrichtung des Förderbandes über die Förderbandbreite hinaus mit einem Stelltrieb ausstellbar sind.

In der Zeichnung ist der Erfindungsgegenstand an einem Ausführungsbeispiel schematisch dargestellt. Es zeigen
- Fig. 1: eine erfindungsgemäße Materialverlademaschine in Seitenansicht, die Ansicht Z zeigt die Förderbänder in einer möglichen Verladeposition,
- Fig. 2: eine Schotterverladung auf eine Materialfördersiloeinheit wobei die Materialverlademaschine auf dem Gleis steht und sich seitlich auf den Schwellen oder dem Gleisbett abstützt in Seitenansicht,
- Fig. 3: die erfindungsgemäße Vorrichtung seitlich des Gleises stehend bei Beladung einer Materialfördersiloeinheit in Draufsicht,
- Fig. 4: die erfindungsgemäße Vorrichtung auf einem Tiefladewaggon stehend in Draufsicht und
- Fig. 5: eine Vorderansicht auf das Übernahmeförderband mit seitlichen verstellbaren Abstützvorrichtungen.

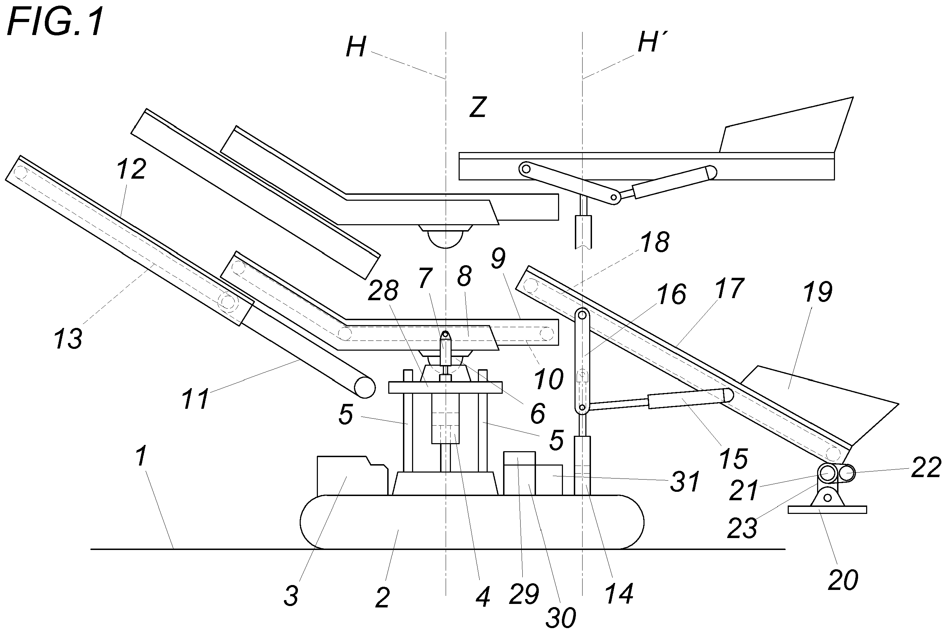

Eine erfindungsgemäße Vorrichtung, eine Materialverlademaschine (Fig. 1), zur universellen Be- und Entladung von Material im Gleisbau besteht aus einem Fahrwerk 2 mit Dieselantriebsmotor 3, elektrischer Stromversorgungseinheit 30, Hydraulikversorgung 31 und elektrischer/ elektronischer Steuerungseinheit 29. Ein Drehkranz 28 ist über einen Hydraulikzylinder 4 höhenverstellbar. Der Drehkranz 28 wird über Führungssäulen 5 geführt. Auf dem Drehkranz 28 befindet sich ein Kettenförderband 9 welches über eine Drehpfanne 6 auf dem Drehkranz 28 gelagert ist. Über mindestens einen Hydraulikzylinder 7 kann das Förderband 9 relativ zur Vertikalen seitlich geneigt werden. Mit diesem Förderband 9 verbunden ist ein weiteres Förderband 12 welches über einen Kettenantrieb 11 oder einen ähnlichen Antrieb aus- und einfahrbar ist. Förderband 9 und Förderband 12 bilden zusammen das Übergabeförderband (9, 12). Die Förderbänder 12 und 17 können als Gurtbänder 13, 18 oder aber auch als Kettenbänder gestaltet werden.

Für die Schotterbeladung z.B. mittels Bagger ist ein Übernahmeförderband 17 mit Beladetrichter 19 vorgesehen. Dieses Übernahmeförderband ist über zwei Hydraulikzylinder 14 höhenverstellbar, über einen Schwenkarm 16 und einen Schwenkzylinder 15 kann das Übernahmeförderband 17 hinsichtlich des Anstellwinkels verändert und aus seiner Verladeposition in seine Transportposition gebracht werden.

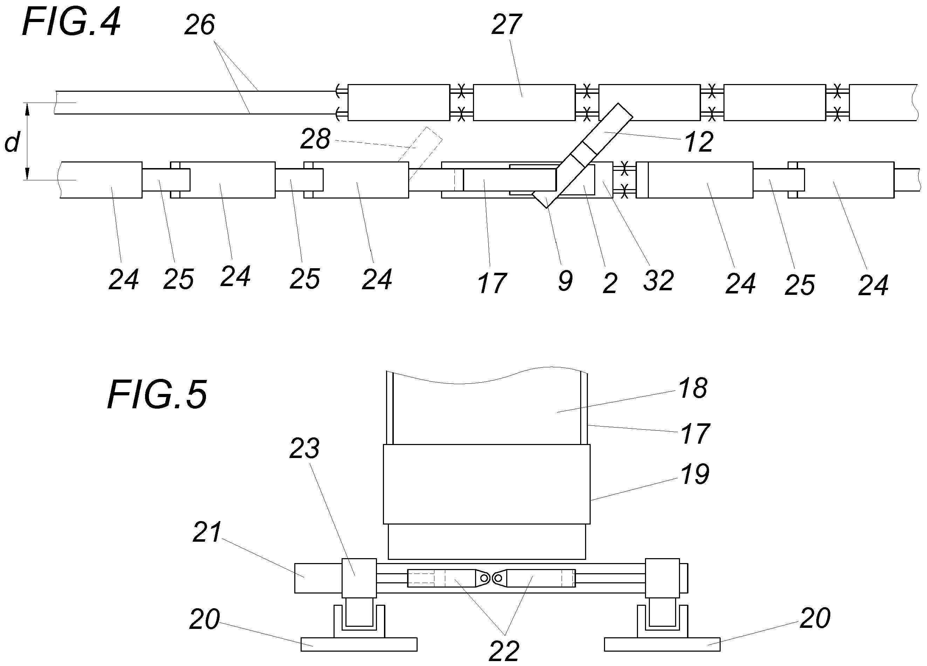

Das Übernahmeförderband 17 weist Abstützvorrichtungen (Fig. 5) auf. Diese bestehen aus gelenkig gelagerten Abstützplatten 20. Über eine Führungsstange 21 kann über Buchsen 23 an denen die Abstützplatten 20 befestigt sind und über Hydraulikzylinder 22 die Abstützweite kontinuierlich eingestellt werden. Die Materialverlademaschine hat dabei eine Länge von rund 15-20m, eine Breite von 2,5-3,5m und eine Verladehöhe über dem Aufstandspunkt des Fahrwerks von 5,5-6,5m. Die Breite der vorgesehenen Förderbänder beträgt etwa 2m und die vorgesehenen Bandgeschwindigkeiten v liegen bei etwa 0,8-1,2 m/s bei Fördermengen von 500-800 m³/h.

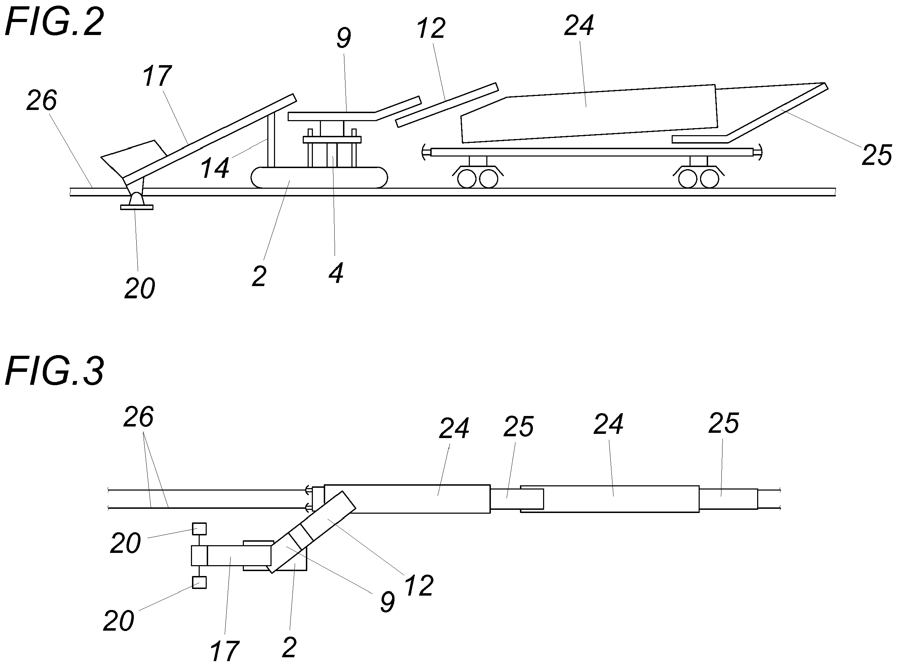

Bei der Beladung von Materialfördersiloeinheiten die sich auf dem Gleis befinden (Fig. 2) positioniert sich die Materialverlademaschine mit den Raupen 2 auf den Schienen 26. Das hintere Übergabeförderband 9 wird über die Höhenverstellung 4 und das vordere Übergabeförderband 12 über die Ausschubvorrichtung 11 so eingestellt, dass die Materialfördersiloeinheit 24 beladen werden kann. Die Materialverlademaschine wird dabei seitlich auf den Schwellen oder auf dem Schotterbett über die Abstützvorrichtungen 20 abgestützt.

Fig. 3 zeigt die Vorrichtung seitlich eines Gleises stehend bei Beladung einer Materialfördersiloeinheit in Draufsicht, wobei das Übergabeförderbandende mit dem Drehkranz soweit zum Gleis gedreht sind, dass die Materialfördersiloeinheit beladen werden kann, dazu wird die Höhe des Übergabeförderbandes und des Übernahmeförderbandes entsprechend eingestellt, bei Schrägneigung der Verlademaschine werden die oberen Übergabeförderbänder dabei entsprechend entgegengesetzt geneigt.

Bei Beladung von Materialfördersiloeinheiten 24 oder konventionellen Schotterwagen 27 die sich auf dem Gleis 26 befinden und wo eine Beladung von der Seite her erfolgen soll steht die Materialverlademaschine neben dem Gleis. Wegen der Dreheinrichtung 28 kann dabei das Gerät in beliebigem Winkel (0-180°) zum Gleis stehen und eine Beladung durchführen. Der Schotter wird dabei meist über LKW oder Bagger beigebracht. Wie in Fig. 3 beispielhaft gezeigt werden die Übergabeförderbänder 9, 12 seitlich so geschwenkt, dass sie in die Materialfördersiloeinheit 24 hineintreffen. Die Höhe des Bandes sowie der Abstand können mittels der Hubeinrichtung 4 und der Ausfahreinrichtung 11 entsprechend angepasst werden. Schrägstellungen können über die Neigungsverstellung 7 kompensiert oder bewusst eingestellt werden.

Bei Umladung des Materials von Materialfördersiloeinheiten 24 auf konventionelle Schotterwagen 27 am Nachbargleis 26 wird die Materialverlademaschine auf einem Tiefladewaggon 32 abgesetzt. Wie in Fig. 4 beispielhaft gezeigt werden die Übergabeförderbänder 9, 12 seitlich so geschwenkt, dass sie in den Schotterwagen 27 hineintreffen. Die Höhe wird dabei mittels der Höhenverstellung 4 angepasst. Die Länge der Übergabeförderbänder ist derart, dass Gleisabstände d größer als 4m überwunden werden können. Wie in Fig. 4 eingezeichnet sind die Übergabeförderbänder 28 der Materialfördersiloeinheiten 24 zu kurz um in die Schotterwagen 27 bei Gleisabständen größer als 4m hineinzutreffen. Da außerdem die Höhe der Übergabeförderbänder 25 der Materialfördersiloeinheiten 24 nicht verstellt werden kann sind deren Einsatzmöglichkeiten vom Typ der Schotterwagen 27 (Wandhöhen, Breiten) und der aktuellen Überhöhung des eigenen und des Nachbargleises abhängig und beschränkt.

Diese Beschränkungen entfallen bei der erfindungsmäßigen Materialverlademaschine. Im gezeigten Bild werden dabei die hinter der Materialverlademaschine befindlichen Materialfördersiloeinheiten entladen.

Werden die Übergabeförderbänder 9,12 nicht verschwenkt, dann kann die Materialverlademaschine auf dem Tiefladewaggon 32 auch als Durchförderanlage zwischen den hinteren und den vorderen Materialfördersiloeinheiten 24 benutzt werden.

## Patentansprüche

1. Vorrichtung zur Materialförderung für den Gleisbau, mit einer auf einem Fahrwerk, insbesondere einem Raupenfahrwerk (2), verfahrbaren Materialverladeeinrichtung mit je wenigstens einem Übernahmeförderband (17) zur Übernahme von Material und mit einem Übergabeförderband (9, 12) zur Übergabe von Material, wobei das Übergabeförderband (9, 12) um eine Fahrwerkhochachse (H) mit einem Drehantrieb drehbar und entlang der Fahrwerkhochachse mit einem Hubtrieb (4) höhenverstellbar ist, **dadurch gekennzeichnet, dass** sich das Übergabeförderband aus einem dem Übernahmeförderband (17) nachgeordneten hinteren Übergabeförderband (9) und wenigstens einem sich in Förderrichtung daran anschließenden vorderen Übergabeförderband (12) zusammensetzt, wobei das hintere Übergabeförderband (9) in Förderrichtung nach oben geknickt ausgeführt ist, also wenigstens zwei Abschnitte mit unterschiedlichen Steigungen aufweist und wobei das vordere Übergabeförderband (12) im Steigungswinkel des in Förderrichtung zweiten Abschnittes angestellt ist.

2. Vorrichtung nach Anspruch 1, **dadurch gekennzeichnet, dass** das vordere Übergabeförderband (12) über eine Verstelleinrichtung (11) parallel zum zweiten Abschnitt verlagerbar, gegebenenfalls teleskopisch ausgebildet ist, ist.

3. Vorrichtung nach einem der Ansprüche 1 oder 2, **dadurch gekennzeichnet, dass** das Übergabeförderband (9, 12) zwecks Einstellung des Steigungswinkels des Übergabeförderbandes (9, 12) mit einem Neigungsantrieb (7) um eine Fahrwerkshorizontalachse eines Lagers (6) neigungsverstellbar ist.

4. Vorrichtung nach einem der Ansprüche 1 bis 3, **dadurch gekennzeichnet, dass** das dem Übergabeförderband (9, 12) in Förderrichtung vorgeordnete, gegebenenfalls mit einem Beladetrichter (19) ausgestattete, Übernahmeförderband (17) entlang einer Fahrwerkhochachse (H') mit einem Hubtrieb (14) höhenverstellbar (4) ist.

5. Vorrichtung nach einem der Ansprüche 1 bis 4, **dadurch gekennzeichnet, dass** das dem Übergabeförderband (9, 12) in Förderrichtung vorgeordnete, gegebenenfalls mit einem Beladetrichter (19) ausgestattete, Übernahmeförderband (17) zwecks Einstellung des Steigungswinkels des Übernahmeförderbandes (17) mit einem Stelltrieb (15, 16) neigungsverstellbar ist.

6. Vorrichtung nach einem der Ansprüche 1 bis 5, **dadurch gekennzeichnet, dass** dem Übernahmeförderband (17) hinsichtlich ihres gegenseitigen Abstandes zueinander einstellbare Abstützungen (20, 21, 22, 23) zugeordnet sind, die quer zur Förderrichtung des Förderbandes über die Förderbandbreite hinaus mit einem Stelltrieb ausstellbar sind.

7. Vorrichtung nach einem der Ansprüche 5 bis 6, **dadurch gekennzeichnet, dass** der Hubtrieb (14) zwei Hydraulikzylinder umfasst, mit denen das Übergabeförderband (17) um seine Förderlängsachse verkippbar ist.

## Claims

1. Apparatus for conveying material for railway construction, said apparatus comprising:
a material loading device movable on a chassis, in particular a crawler chassis (2) and having at least one receiving conveyor belt (17) for receiving material and having a transfer conveyor belt (9, 12) for transferring material, wherein the transfer conveyor belt (9, 12) is rotatable about a chassis vertical axis (H) by means of a rotary drive and is adjustable in height along the chassis vertical axis using a lifting drive (4),
**characterised in that** the transfer conveyor belt is composed of a rear transfer conveyor belt (9) arranged downstream of the receiving conveyor belt (17) and at least one front transfer conveyor belt (12) following therefrom in the conveying direction, wherein
the rear transfer conveyor belt (9) is designed to be bent upwards in the conveying direction, i.e. has at least two sections with different gradients, and wherein the front transfer conveyor belt (12) is set at the gradient angle of the second section in the conveying direction.

2. Apparatus as claimed in claim 1, **characterised in that** the front transfer conveyor belt (12) is displaceable by means of an adjusting device (11) in parallel with the second section, optionally is configured to be telescopic.

3. Apparatus as claimed in any one of claims 1 or 2, **characterised in that**, for the purpose of adjusting the gradient angle of the transfer conveyor belt (9, 12), the transfer conveyor belt (9, 12) is adjustable in inclination about a chassis horizontal axis of a bearing (6) by means of an inclination drive (7).

4. Apparatus as claimed in any one of claims 1 to 3, **characterised in that** the receiving conveyor belt (17) arranged upstream of the transfer conveyor belt (9, 12) in the conveying direction, optionally fitted with a loading hopper (19), is adjustable in height (4) along a chassis vertical axis (H') by means of a lifting drive (14).

5. Apparatus as claimed in any one of claims 1 to 4, **characterised in that** the receiving conveyor belt (17) arranged upstream of the transfer conveyor belt (9, 12) in the conveying direction, optionally fitted with a loading hopper (19), is adjustable in inclination by means of an actuator (15, 16) for the purpose of adjusting the gradient angle of the receiving conveyor belt (17).

6. Apparatus as claimed in any one of claims 1 to 5, **characterised in that** the receiving conveyor belt (17) is assigned supports (20, 21, 22, 23) which are adjustable with respect to one another with regard to their mutual spacing and can be deployed transversely to the conveying direction of the conveyor belt beyond the width of the conveyor belt by means of an actuator.

7. Apparatus as claimed in any one of claims 5 to 6, **characterised in that** the lifting drive (14) comprises two hydraulic cylinders, by means of which the transfer conveyor belt (17) can be tilted about its conveying longitudinal axis.

## Revendications

1. Dispositif destiné au transport de matériel pour la construction de voies ferrées, avec un dispositif de chargement de matériaux pouvant se déplacer sur un châssis, en particulier un châssis à chenilles (2), avec respectivement au moins une bande de transport et de préhension (17) pour la prise en charge des matériaux, et avec une bande de transport et de livraison (9, 12) pour le transfert des matériaux, la bande de transport et de livraison (9, 12) pouvant être tournée autour d'un axe vertical (H) du châssis avec un moteur rotatif, et pouvant être réglée en hauteur le long de l'axe vertical du châssis avec un mécanisme élévateur (4), **caractérisé en ce que** la bande de transport et de livraison se compose d'une bande de transport et de livraison arrière (9), montée en aval de la bande de transport et de préhension (17) et au moins d'une bande de transport et de livraison avant (12) s'y raccordant dans le sens de transport, la bande de transport et de livraison arrière (9) étant réalisée pliée vers le haut dans le sens de transport, présentant, ainsi, au moins deux sections avec des inclinaisons différentes et la bande de transport et de livraison avant (12) étant placée selon l'angle d'inclinaison de la deuxième section dans le sens de transport.

2. Dispositif selon la revendication 1, **caractérisé en ce que** la bande de transport et de livraison avant (12) est réalisée mobile, le cas échéant télescopique, parallèlement à la deuxième section au-dessus d'un dispositif de réglage (11).

3. Dispositif selon l'une des revendications 1 ou 2, **caractérisé en ce que** la bande de transport et de livraison (9, 12) peut être réglée en inclinaison, en vue d'ajuster l'angle d'inclinaison de la bande de transport et de livraison (9, 12), avec un mécanisme d'inclinaison (7) autour d'un axe horizontal du châssis d'un palier (6).

4. Dispositif selon l'une des revendications 1 à 3, **caractérisé en ce que** la bande de transport et de préhension (17), munie d'une trémie de chargement (19) le cas échéant, disposée en amont dans le sens de transport, de la bande de transport et de livraison (9, 12) peut être réglée en hauteur le long d'un axe vertical (H')du châssis, avec un mécanisme élévateur (14).

5. Dispositif selon l'une des revendications 1 à 4, **caractérisé en ce que** la bande de transport et de préhension (17), munie d'une trémie de chargement (19) le cas échéant, disposée, dans le sens de transport, en amont de la bande de transport et de livraison (9, 12) peut être réglée en inclinaison en vue d'ajuster l'angle d'inclinaison de la bande de transport et de préhension (17) avec un mécanisme de commande (15, 16).

6. Dispositif selon l'une des revendications 1 à 5, **caractérisé en ce que** des appuis (20, 21, 22, 23) réglables les uns par rapport aux autres quant à leur espacement mutuel et qui peuvent être déployés transversalement au sens de transport de la bande de transport, au-delà de la largeur de la bande de transport avec un mécanisme de commande, sont associés à la bande de transport et de préhension (17).

7. Dispositif selon l'une des revendications 5 à 6, **caractérisé en ce que** le mécanisme élévateur (14) comprend deux vérins hydrauliques avec lesquels la bande de transport et de préhension (17) peut être basculée autour de son axe longitudinal de transport.
